# EUROPÄISCHE PATENTSCHRIFT

(11) **EP 1 170 539 B1**
(45) Veröffentlichungstag und Bekanntmachung des Hinweises auf die Patenterteilung: **23.08.2006**
(21) Anmeldenummer: 01103407.1
(22) Anmeldetag: 14.02.2001
(51) Int. Cl.: F16L 23/08

(54) **Vorrichtung zum lösbaren Verbinden rotationssymmetrischer Bauteile**
Device for releasably connecting elements with rotational symmetry
Dispositif pour la connexion amovible des pièces symétriques de révolution

(30) Priorität: 07.07.2000 DE 10033093
(43) Veröffentlichungstag der Anmeldung: 09.01.2002
(73) Patentinhaber: EADS Space Transportation GmbH, 28199 Bremen (DE)
(72) Erfinder: Hüssler, Walter, Dr.-Ing., 28816 Stuhr (DE); Gloyer, Gerd, 27777 Ganderkesee (DE)
(74) Vertreter: Hansmann, Dierk

(56) Entgegenhaltungen:
- DE-A- 3 742 067
- DE-A- 19 711 579
- US-A- 2 816 343
- US-A- 4 128 921
- PATENT ABSTRACTS OF JAPAN vol. 1997, no. 07, 31. Juli 1997 (1997-07-31) & JP 09 079222 A (THREE TEC:KK), 25. März 1997 (1997-03-25)

## Beschreibung

Die Erfindung betrifft eine Vorrichtung zum lösbaren Verbinden rotationssymmetrischer zylindrischer oder kegeliger Bauteile in Form eines Spannbandes, das die zu verbindenden Bauteile in den Spannebenen umfaßt, auf dessen Innenseite Klammerelemente angeordnet sind, die mit flanschartig ausgebildeten Ansätzen der Bauteile zusammenwirken, und bei dem wenigstens ein Spanngurt um senkrecht zur Zugrichtung des Spannbandes angeordnete Bolzen geführt ist , wobei zwei sich gegenüberliegende Bolzen über ein Spannelement lösbar miteinander verbunden sind.

Eine Vorrichtung dieser Art ist aus der DE 37 27 448 C2 bekannt geworden und wird insbesondere im Bereich der Raumfahrttechnik eingesetzt, um Nutzlasten an Endstufen von Trägerraketen zu haltern und sie bei Erreichen der vorgesehenen Zielumlaufbahn durch das Öffnen des Spannelementes von diesen zu lösen. Eine weitere für diesen Verwendungszweck eingesetzte Vorrichtung, die auch als Marman-Spannbandverbindung bezeichnet wird, ist darüber hinaus in der DE-OS 26 55 772 beschrieben. Bei beiden bekannten Vorrichtungen sind auf der Innenfläche des Spannbandes Klammerelemente angeordnet, die wiederum auf ihrer Innenseite konische Ausnehmungen aufweisen, mit denen sie über entsprechend geformte Flansche oder Interfaceringe greifen, die an den Endbereichen der miteinander zu verbindenden Bauteile angeordnet sind. Durch eine pyrotechnische Sprengung der Spannelemente, die das Spannband zusammenhalten, werden diese Klammerelemente von den Flanschen oder Interfaceringen heruntergezogen, so daß sich die Bauteile, beispielsweise eine Nutzlast und eine Trägerendstufe, voneinander lösen.

Bei einer solchen pyrotechnischen Trennung der Spannelemente wird die in den Spanngurten gespeicherte hohe Energie schlagartig freigegeben, wodurch unter Umständen eine vergleichsweise starke Schockbelastung in den angrenzenden Bauteilen und Systemen der Rakete sowie in der Nutzlast verursacht wird.

Aufgabe der Erfindung ist es, eine Vorrichtung der eingangs genannten Art so auszubilden, daß sie eine störungsfreie, konstante Radialspannung längs des gesamten Bauteilumfanges gewährleistet und eine kontrollierte radiale Öffnungsbewegung des Spannbandes ermöglicht.

Die Erfindung löst die Aufgabe, indem sie vorsieht, daß das Spannelement aus zwei im Abstand voneinander an einem Grundelement schwenkbar gehalterten Spannhebeln besteht, die die Bolzen tragen und die in ihrer Spannposition über Verriegelungselemente arretierbar sind.

Bei der erfindungsgemäßen Vorrichtung erfolgt das Lösen des Spannbandes und damit die Trennung der miteinander verbundenen Komponenten durch ein Verschwenken der Spannhebel aus einer Schließ- in eine Öffnungsposition, während das Spannelement als Ganzes und damit die gesamte Anordnung in geschlossenem Zustand verbleibt. Die beim Spannen des Bandes in diesem gespeicherte Energie wird auf diese Weise zunächst in Bewegungs- und anschließend erneut in elastische Energie umgesetzt, die wieder vom Band aufgenommen wird. Zur örtlichen Begrenzung der Öffnungsbewegung sind vorzugsweise zusätzliche Bandhalter vorgesehen, so daß das Spannsystem örtlich fixiert ist und eine kontrollierte radiale Öffnungsbewegung des Bandes erreicht wird.

Weitere Ausgestaltungen der Erfindung sind durch die Merkmale der Unteransprüche gekennzeichnet.

Im folgenden soll die Erfindung anhand von in der Zeichnung dargestellten Ausführungsbeispielen näher erläutert werden. Es zeigen:
- Fig. 1: eine perspektivische Darstellung eines Spannbandes in geschlossenem Zustand,
- Fig. 2: die Anordnung gemäß Fig. 1 in Draufsicht im geöffneten Zustand,
- Fig. 3: Details der Anordnung gemäß Fig. 1 in geschnittener Darstellung,
- Fig. 4: den Verschlußbereich der Anordnung gemäß Fig. 1 in geöffnetem Zustand und
- Fig. 5: in einer Prinzipskizze die Kräfteverteilung bei einer Anordnung gemäß Fig. 1.

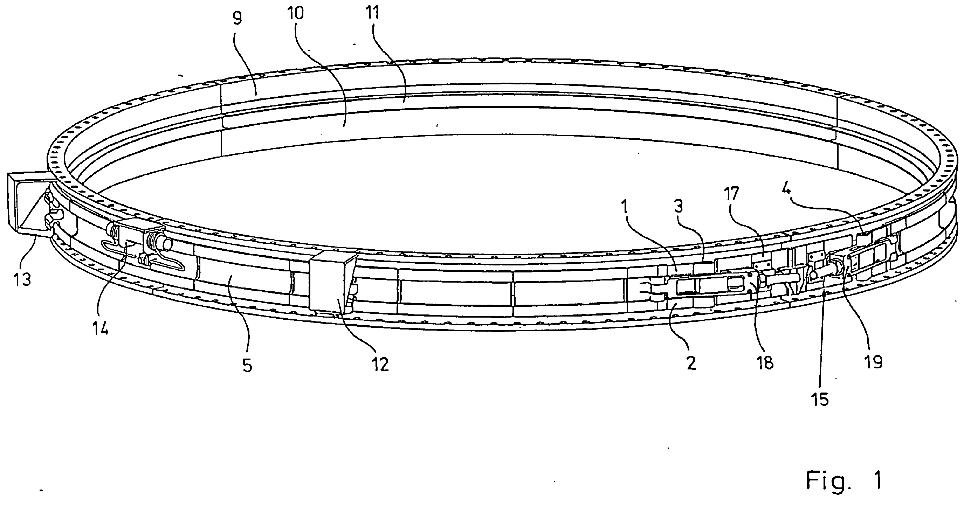

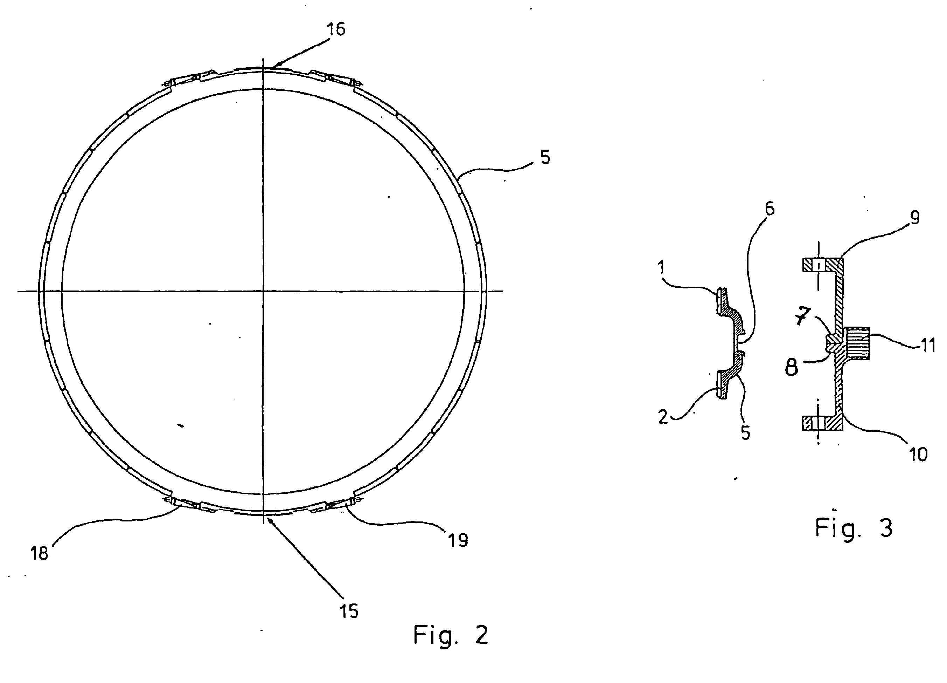

Bei der in Fig. 1 dargestellten Anordnung wird eine Verbindungsvorrichtung nach Art eines Spannbandes von zwei Spanngurten 1 und 2 gebildet, die im Abstand parallel zueinander angeordnet sind. Die Spanngurte 1 und 2 sind um Verbindungsbolzen 3 und 4 geschlungen, die parallel zur Längsachse zweier miteinander zu verbindender, in der Zeichnung nicht dargestellter rotationssymmetrischer, insbesondere zylindrischer oder kegelförmiger Bauteile liegen. Zwischen den beiden Spanngurten 1 und 2 ist eine Vielzahl gleichartig aufgebauter Klammerelemente 5 angeordnet, die den im linken Teil der Fig. 3 gezeigten Querschnitt aufweisen. Insbesondere sind die Klammerelemente 5 in ihrem mittlerem Bereich jeweils mit in umfangsrichtung durchlaufenden konischen Ausnehmungen 6 versehen, die in ihrer Form auf entsprechende konisch ausgebildete Flächen 7, 8 von Anschluß- oder Interfaceringen 9, 10 abgestimmt sind, die die Verbindung zu den angrenzenden, miteinander zu verbindenden Bauteilen herstellen. Einer der Anschlußringe 9, 10 ist auf der Innenfläche ferner mit einer umlaufenden ringförmigen Verstärkung 11 versehen. Vervollständigt wird die Anordnung durch eine Reihe von Bandhaltern 12, 13 sowie durch Abzugsfedern 14.

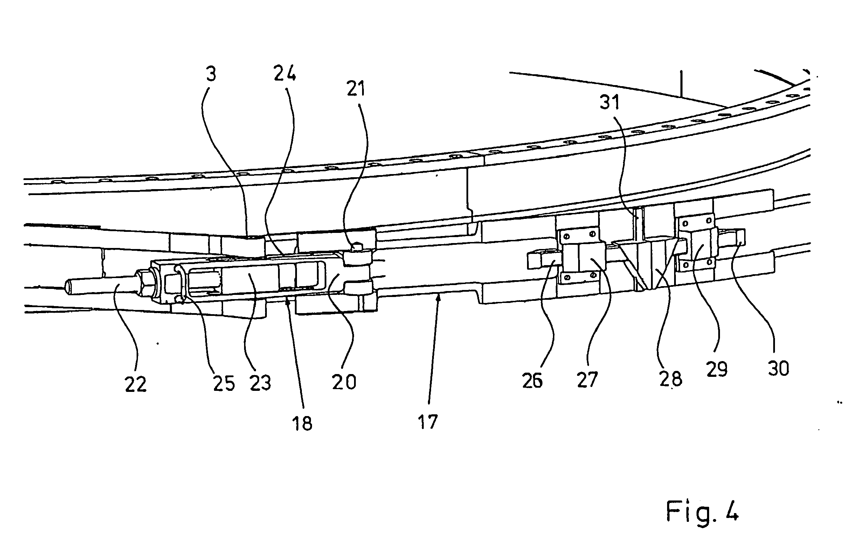

Die Verbindungsbolzen 3 und 4 sind, wie insbesondere die vergrößerte Darstellung gemäß Fig. 4 zeigt, jeweils paarweise in einem Spannelement 15, 16 gehaltert. Letzteres besteht jeweils aus einer Trägerplatte 17, die in ihrer Form dem Radius der miteinander zu verbindenden Anschlußringe 9, 10 angepaßt ist und auf der zwei Spannhebel 18 und 19 schwenkbar gelagert sind.

Die Spannhebel 18 und 19 sind, wie aus der Detaildarstellung in Fig. 4 hervorgeht, jeweils über die Bolzen 3 bzw. 4 mit den Spanngurten 1 und 2 verbunden und als sogenannte Schnellspannhebel ausgebildet. Der eigentliche Spannhebel wird dabei jeweils von einem angenähert rechteckigen Rahmen 20 gebildet, dessen eines Ende um eine von einem Schwenkbolzen 21 gebildete, parallel zu den Bolzen 3 und 4 verlaufende Achse schwenkbar gehaltert ist. Der andere Endbereich des Rahmens 20 trägt in einer Gewindebohrung eine Spannschraube 22, die sich in das Innere des Rahmens 20 erstreckt und dort mit einem Ansatz 23 versehen ist. Dieser Ansatz 23 wiederum ist als Halterung für den Bolzen 3 ausgebildet, der durch Langlochbohrungen 24 des Rahmens 20 hindurch zu beiden Seiten aus dem Rahmen 20 hinausragt und in diesen Bereichen die beiden Spanngurte 1 und 2 trägt. An dem die Spannschraube 22 tragenden Endbereich des Rahmens 20 ist schließlich noch ein Haltebügel 25 angebracht, dessen Funktion nachfolgend erläutert wird.

Der Haltebügel 25 wirkt zusammen mit einem Riegel 26, der im Abstand zum Schwenkbolzen 21 in einer Aufnahme 27 an der Trägerplatte 17 in Längsrichtung des Spannbandes verschieblich gehaltert ist. Der Riegel 26 ragt mit seinen beiden Endbereichen aus der Aufnahme 27 hinaus, wobei ein Endbereich in der Schließposition der Anordnung unter den Haltebügel 25 greift, während der dem Spannhebel 18 abgewandte Endbereich abgeschrägt ausgebildet ist. Dieser schräge Endbereich wirkt wiederum mit einem weiteren, konisch ausgebildeten Öffnungsriegel 28 zusammen, der entlang einer Führung 31 in axialer Richtung der Anordnung verschieblich an der Trägerplatte 17 gehaltert ist. Während eine der beiden schräg verlaufenden Flächen des Öffnungsriegels 28 an dem entsprechend ausgebildeten Endbereich des Riegels 26 anliegt, wirkt die zweite dieser Flächen in gleicher Weise mit einem zweiten derartigen, in einer Aufnahme 29 geführten Riegel 30 zusammen, der zu einer identisch, aber spiegelbildlich aufgebauten Anordnung gehört, die den zweiten Spannhebel 19 bildet.

Bei der Montage der Anordnung ermöglichen die Spannhebel 18 und 19 durch einfaches Umlegen einen raschen Übergang von der in Fig. 4 dargestellten geöffneten zu der in Fig. 1 gezeigten geschlossenen Stellung und damit das Aufbringen einer Vorspannung auf die Spanngurte 1 und 2. Die radiale Verschiebung der Klammerelemente 5 wird dabei durch die beiden Spannhebel 18 und 19 bewirkt, wodurch der für das vollständige Spannen der Anordnung noch erforderliche Spannschraubweg wesentlich verkürzt wird. Die endgültige Vorspannung der Spanngurte 1 und 2 wird schließlich durch Verdrehen der Spannschrauben 22 eingestellt.

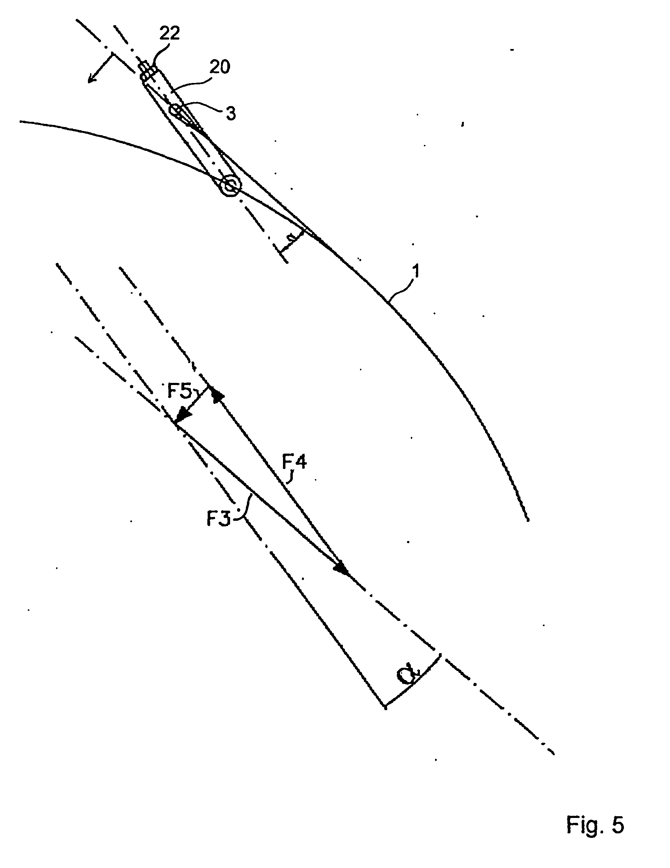

Nach erfolgtem Umlegen werden die Spannhebel 18 und 19 durch die Haltebügel 25 sowie die Riegel 26 und 30 in der Schließposition gehalten. Fig. 5 veranschaulicht in einem Kräftediagramm die dabei auf den Spannhebel 20 wirkenden Kräfte und deren Richtungen. Der Winkel α zwischen der Bandkraft F3 und der axialen Spannhebelkraft F4 bewirkt eine kleine zusätzliche Kraft F5, die im geschlossenen System der Haltekraft entspricht. Eine mechanische Sicherung des Öffnungsriegels 28 verhindert zudem ein nicht vorgesehenes Öffnen der Anordnung.

Bei Erreichen der vorgegebenen Position erfolgt durch die Riegel 26 und 30 die Freigabe der Anordnung. Bei der hier beschriebenen Anordnung erfolgt dies durch ein elektromagnetisches System, es sind aber auch andere, ähnlich aufgebaute Öffnungssysteme möglich. Die Keilform der Riegel 26 und 30 sowie des Öffnungsriegels 28 bewirkt dabei eine kontrollierte Öffnung des Systems und sorgt für eine verzögerte Freigabe der in ihm gespeicherten Energie. Diese verzögerte Freigabe wird zusätzlich durch den Verlauf der Kraft F5 unterstützt, die gemäß dem in Fig. 5 dargestellten Diagramm mit zunehmendem Winkel α zunimmt und damit im geöffneten System die resultierende Öffnungskraft liefert. Zugleich unterstützen die im gesamten System vorhandene Reibung sowie die Massenträgheitskräfte des Spann- und Verriegelungssystems und des Klammer-Bandsystems den kontrolliert ablaufenden Öffnungsvorgang.

Die vorstehend beschriebene Anordnung stellt dabei ein wesentlich vereinfachtes Spannelement mit erweiterten Funktionen dar. Da die eigentliche Separation durch das Öffnen der Spannhebel 18 und 19 erfolgt, bleibt das aus den Klammerelementen 5, den Spannhebeln 18 und 19, den Trägerplatten 17 sowie den Spanngurten 1 und 2 bestehende System stets geschlossen. Die durch das Spannen in ihm gespeicherte Energie wird beim Öffnen zunächst in Bewegungs- und anschließend wieder in elastische Bandenergie umgesetzt. Die Bandhalter 12 und 13 sowie die Abzugsfeder 14 dienen dabei der örtlichen Bewegungsbegrenzung, so daß die kontrollierte radiale Öffnungsbewegung des Bandes unterstützt wird und das Spannsystem örtlich fixiert ist.

Die bei der hier beschriebenen Anordnung vorgesehenen doppelten Spanngurte 1 und 2, die auch als Bänder oder Seile ausgebildet sein können, ermöglichen eine Optimierung der Flächenpressung auf die Kontakfläche zwischen den Klammerelementen 5 und den Anschlußringen 9 und 10. zugleich bewirkt das so gebildete Druckspannsystem eine gleichmäßige radiale Belastung durch die Klammerelemente 5 auf die Kontaktflächen 7 und 8, da der Kontakt auf dem gesamten Umfang gewährleistet ist und der Abstand zwischen dem Spanngurt und den Klammerelementen überall gleich groß ist.

Durch die Wahl entsprechend langer Spanngurte bzw. Spannseile und die Anordnung der erforderlichen Anzahl von Klammerelementen kann die vorstehend beschriebene Spannbandvorrichtung für praktisch alle Durchmesser an Interfaceringen bzw. Flanschen eingesetzt werden. Darunter auch für solche mit sehr großen Durchmessern, bei denen bisher Probleme ein Einsatz derartiger Spannbandverbindungen als nicht möglich angesehen wurde und statt dessen aufwendigere und vor allem schwerere Verbindungsvorrichtungen eingesetzt wurden. Bei der Auslegung der erforderlichen Festigkeiten braucht bei Verwendung der vorstehend beschriebenen Anordnung das Auftreten von etwaigen Biegemomenten an den Interfaceringen nicht berücksichtigt zu werden. Vielmehr bilden die von den Spannbändern umschlossenen Interfaceringe ein System hoher Tragfähigkeit, wobei letztere im wesentlichen nur durch die Festigkeit der Interfaceringe oder Flansche begrenzt wird.

## Patentansprüche

1. Vorrichtung zum lösbaren Verbinden rotationssymmetrischer zylindrischer oder kegeliger Bauteile in Form eines Spannbandes, das die zu verbindenden Bauteile in den Spannebenen umfaßt, auf dessen Innenseite Klammerelemente (5) angeordnet sind, die mit flanschartig ausgebildeten Ansätzen der Bauteile zusammenwirken, und bei dem wenigstens ein Spanngurt um senkrecht zur Zugrichtung des Spannbandes angeordnete Bolzen (3,4) geführt ist, wobei zwei sich gegenüberliegende Bolzen (3,4) über ein Spannelement lösbar miteinander verspannt werden, **dadurch gekennzeichnet, daß** das Spannelement (15) aus zwei im Abstand von einander schwenkbar gehalterten Spannhebeln (18, 19) besteht, die die Bolzen (3, 4) tragen und die in ihrer Spannposition über Verriegelungselemente (25, 26, 28, 30) arretierbar sind.

2. Vorrichtung nach Anspruch 1, **dadurch gekennzeichnet, daß** das Spannelement (15) aus einer Trägerplatte (17), die in ihrer Form an den Radius der miteinander zu verbindenden Anschlußringe (9, 10) angepaßt ist, besteht, an der die Spannhebel (18, 19) gehaltert sind.

3. Vorrichtung nach Anspruch 1 oder 2, **dadurch gekennzeichnet, daß** die Spannhebel (18, 19) als Schnellspannhebel ausgebildet sind.

4. Vorrichtung nach einem der Ansprüche 1 bis 2, **dadurch gekennzeichnet, daß** die Spannhebel (18, 19) mit Haltebügeln (25) versehen sind, die mit Riegeln (26, 30) zusammenwirken, die jeweils in einer Aufnahme (27, 29) an der Trägerplatte (17) in Längsrichtung des Spannbandes verschieblich gehaltert sind.

5. Vorrichtung nach Anspruch 4, **dadurch gekennzeichnet, daß** die Riegel (26, 30) schräge Endbereiche aufweisen, die an einem konisch ausgebildeten Öffnungsriegel (28) anliegen, der entlang einer Führung (31) in axialer Richtung verschieblich an der Trägerplatte (17) gehaltert ist.

6. Vorrichtung nach einem der Ansprüche 1 bis 5, **dadurch gekennzeichnet, daß** in Umfangsrichtung mehrere Spannelemente (15, 16) angeordnet sind.

7. Vorrichtung nach einem der Ansprüche 1 bis 6, **dadurch gekennzeichnet, daß** das Spannband aus zwei parallelen Spanngurten (1, 2) besteht.

8. Vorrichtung nach einem der Ansprüche 1 bis 7, **dadurch gekennzeichnet, daß** die Spannbänder (1,2) und die Schwenkbolzen (21) auf dem gleichen Durchmesser des Systems liegen.

9. Vorrichtung nach einem der Ansprüche 1 bis 8, **dadurch gekennzeichnet, daß** die Spannbänder (1,2) mit den Spannelementen (15,16) im geöffneten Zustand eine geschlossene Einheit bilden.

## Claims

1. Device for the detachable connection of rotationally symmetrical cylindrical or conical parts in the form of a clamping strap, which encompasses the parts to be connected in the clamping planes, on the inside of which strap clamping elements (5) are arranged, which interact with shoulders formed in the manner of a flange on the parts, and in which at least one clamping belt is led around pins (3, 4) arranged perpendicular to the direction of tension of the clamping strap, two pins (3, 4) lying opposite each other being tensioned releasably with one another via a tensioning element, **characterized in that** the tensioning element (15) comprises two clamping levers (18, 19) swivel-mounted at a distance from one another, which support the pins (3, 4) and can be locked in their clamping position via latching elements (25, 26, 28, 30).

2. Device according to claim 1, **characterized in that** the tensioning element (15) comprises a carrier plate (17), which is adapted in its shape to the radius of the connector rings (9, 10) to be connected to one another, on which the clamping levers (18, 19) are mounted.

3. Device according to claim 1 or 2, **characterized in that** the clamping levers (18, 19) are formed as quick-clamping levers.

4. Device according to one of claims 1 to 2, **characterized in that** the clamping levers (18, 19) are provided with holding stirrups (25), which interact with latches (26, 30), which are mounted respectively in a receptacle (27, 29) on the carrier plate (17) movably in the longitudinal direction of the clamping strap.

5. Device according to claim 4, **characterized in that** the latches (26, 30) have bevelled end sections, which abut a conically formed opening latch (28), which is mounted on the carrier plate (17) movably in an axial direction along a guide (31).

6. Device according to one of claims 1 to 5, **characterized in that** several tensioning elements (15, 16) are arranged in a circumferential direction.

7. Device according to one of claims 1 to 6, **characterized in that** the clamping strap comprises two parallel clamping belts (1, 2).

8. Device according to one of claims 1 to 7, **characterized in that** the clamping straps (1, 2) and the swivel pins (21) lie on the same diameter of the system.

9. Device according to one of claims 1 to 8, **characterized in that** the clamping straps (1, 2) with the tensioning elements (15, 16) form a closed unit in the open state.

## Revendications

1. Dispositif pour la connexion amovible de pièces cylindriques ou sphériques à symétrie de révolution sous la forme d'un collier de serrage qui englobent les pièces à relier dans les plans de serrage et sur le côté intérieur duquel sont disposés des éléments de retenue (5) qui coopèrent avec des saillies des pièces configurées en forme de bride et dans lequel au moins une courroie de serrage est guidée autour de tourillons (3, 4) disposés perpendiculairement au sens de traction du collier de serrage, dans lequel deux tourillons (3, 4) opposés sont serrés l'un avec l'autre de manière desserrable par l'intermédiaire d'un élément de serrage, **caractérisé en ce que** l'élément de serrage (15) est constitué de deux leviers de serrage (18, 19) retenus de manière pivotante à distance l'un de l'autre et qui portent les tourilons (3, 4) et qui peuvent être bloqués dans leur position de serrage par des éléments de verrouillage (25, 26, 28, 30).

2. Dispositif selon la revendication 1, **caractérisé en ce que** l'élément de serrage (15) est constitué d'une plaque de support (17) qui est adaptée dans sa forme au rayon des bagues de connexion (9, 10) à relier l'une à l'autre et sur lesquelles les leviers de serrage (18, 19) sont fixés.

3. Dispositif selon la revendication 1 ou 2, **caractérisé en ce que** les leviers de serrage (18, 19) sont configurés comme des leviers de serrage rapide.

4. Dispositif selon une des revendications 1 à 2, **caractérisé en ce que** les leviers de serrage (18, 19) sont pourvus d'étriers de retenue (25) qui coopèrent avec des verrous (26, 30) qui sont retenus de manière déplaçable dans un évidement (27, 29) sur la plaque de support (17) dans le sens longitudinal du collier de serrage.

5. Dispositif selon la revendication 4, **caractérisé en ce que** les verrous (26, 30) présentent des régions terminales en oblique qui sont adjacentes à un verrou d'ouverture (28) de configuration conique qui est retenu sur la plaque de support de manière déplaçable dans le sens axial le long d'une glissière (31).

6. Dispositif selon une des revendications 1 à 5, **caractérisé en ce que** plusieurs éléments de serrage (15, 16) sont disposés dans le sens périphérique.

7. Dispositif selon une des revendications 1 à 6, **caractérisé en ce que** le collier de serrage est constitué de deux courroies de serrage (1, 2) parallèles.

8. Dispositif selon une des revendications 1 à 7, **caractérisé en ce que** les colliers de serrage (1, 2) et les axes de pivotement (21) sont sur le même diamètre du système.

9. Dispositif selon une des revendications 1 à 8, **caractérisé en ce que** les colliers de serrage (1, 2) forment avec les éléments de serrage (15, 16) à l'état ouvert une unité fermée.
